# EUROPEAN PATENT APPLICATION

(11) **EP 3 493 044 A1**
(43) Date of publication of application: **05.06.2019**
(21) Application number: 17204523.9
(22) Date of filing: 29.11.2017
(51) Int. Cl.: G06F 3/0488

(54) **METHOD OF DISPLAYING AN ITEM ON A TOUCH SCREEN, ELECTRONIC DEVICE AND COMPUTER PROGRAM**

(71) Applicant: Vestel Elektronik Sanayi ve Ticaret A.S., 45030 Manisa (TR)
(72) Inventor: ÇUBUKÇU,, Baran, 45030 Manisa (TR)
(74) Representative: Martinez, Olivier Gildas

(57) **Abstract**

A method of displaying an item on a touch screen comprises detecting (204) a digit pressed on the touch screen. The method comprises determining (208) an orientation of the digit on the touch screen. The method comprises displaying (210) the item on the touch screen in an orientation based on the orientation of the digit on the touch screen.

## Description

### Technical Field

The present disclosure relates to a method of displaying an item on a touch screen, an electronic device and a computer program.

### Background

Most mobile phones are configured to display notifications on their screens to keep users informed about events such as the reception of a message, the state of a battery, a missed phone call or other. Notifications are conventionally expected to be reviewed by users holding mobile phones in a portrait position. A problem may arise when users hold the mobile phones in a landscape position, in an intermediate position between the portrait position and the landscape position or in the portrait position but upside down.

### Summary

According to a first aspect disclosed herein, there is provided a method of displaying an item on a touch screen, the method comprising:
detecting a digit pressed on the touch screen;
determining an orientation of the digit on the touch screen; and
displaying an item on the touch screen in an orientation based on the orientation of the digit on the touch screen.

In this way, the item is flexibly displayed so as to be readable regardless how a user holds an electronic device.

Displaying an item on the touch screen in an orientation based on the orientation of the digit on the touch screen may comprise:
rotating an item previously displayed on the touch screen; or
displaying an item that was previously not displayed on the touch screen.

Determining the orientation of the digit on the touch screen may comprise:
determining that the digit extends in a first direction on the touch screen.

Displaying an item on the touch screen in an orientation based on the orientation of the digit on the touch screen may comprise:
displaying the item on the touch screen to extend in a second direction on the touch screen forming a predetermined angle with the first direction.

The item may comprise a string of characters and the second direction may be a reading direction of the string of characters.

The predetermined angle may be a right angle (i.e. 90 degrees or approximately 90 degrees).

The method may comprise:
determining that the digit on the touch screen is a predetermined digit.

The predetermined digit may be an index finger.

The method may comprise:
scaling the item on the touch screen.

Scaling the item may comprise:
increasing the size of the item in the first direction and/or the second direction.

Scaling the item comprises:
reducing the size of the item in the first direction and/or the second direction.

The item may be a notification, a widget, an icon, an image, a video, a window, a menu, a clock, a date or other.

According to a second aspect disclosed herein, there is provided an electronic device comprising:
a touch screen; and
a processing unit configured to detect a digit pressed on the touch screen, determine an orientation of the digit on the touch screen, and display an item on the touch screen in an orientation based on the orientation of the digit on the touch screen.

The electronic device may be a mobile phone, a tablet computer, a camera, a video game console, a Global Positioning System, a smart watch a Personal Digital Assistant or an electronic book or other.

According to a third aspect disclosed herein, there is provided a computer program for an electronic device, comprising software code portions for performing a method as described above.

### Brief Description of the Drawings

To assist understanding of the present disclosure and to show how embodiments may be put into effect, reference is made by way of example to the accompanying drawings in which:
Figure 1 shows schematically an example of an electronic device according to an embodiment described therein;
Figure 2 shows schematically an example of a flow chart of a method according to an embodiment described therein; and
Figures 3 to 6 show schematically an example of an electronic device in use according to an embodiment described therein.

### Detailed Description

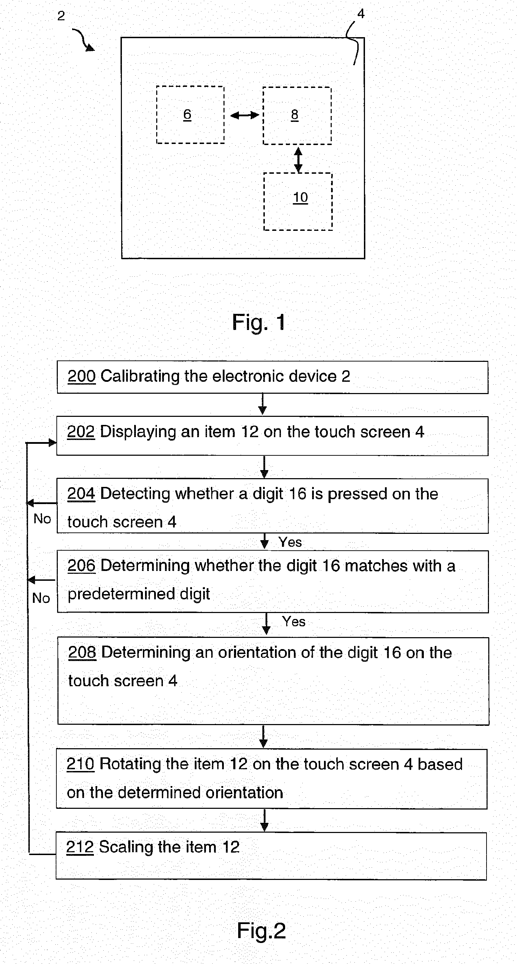

Figure 1 shows schematically an example of an electronic device 2 according to an embodiment. The electronic device 2 may be a mobile phone, a tablet computer, a camera, a video game console, a Global Positioning System, a smart watch a Personal Digital Assistant, an electronic book or other.

The electronic device 2 comprises a touch screen 4 and associated logic 6. The touch screen 4 may be a resistive touch screen, a capacitive touch screen, a surface acoustic wave touch screen, an infrared touch screen, an optical imaging touch screen or other.

The electronic device 2 also comprises a processing unit 8 and a memory unit 10. The memory unit 10 stores a computer program which when executed by the processing unit 8 allows the electronic device 2 to perform the method of Figure 2.

Figure 2 shows schematically an example of a flow chart of a method according to an embodiment.

In step 200, the electronic device 2 is calibrated. For example, a user presses a predetermined digit (e.g. an index finger, middle finger, thumb, etc.) on the touch screen 4. The processing unit 8 identifies a contact area delimited by the predetermined digit. The processing unit 8 determines one or more characteristics of the contact area and stores these characteristics in the memory unit 10. The characteristics may comprise an outer perimeter of the contact area, a surface of the contact area, a pressure on the contact area or other. In this way, the electronic device 2 is configured to determine whether a digit subsequently pressed on the touch screen 4 is the predetermined digit (e.g. index finger) or another digit (e.g. thumb).

It will be understood that calibration may be carried during manufacturing of the electronic device 2 by a default user and/or after manufacturing of the electronic device 2 by the user of the electronic device 2.

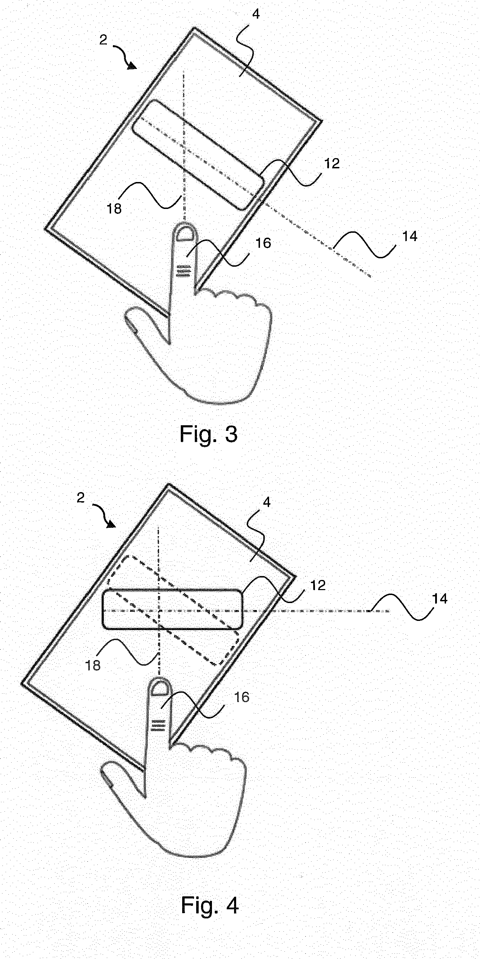

In step 202, the electronic device 2 is used. For example, the electronic device 2 displays an item 12 on the touch screen 4 (as represented on Figure 3). The item 12 may be a notification, a widget, an icon, an image, a video, a window, a menu, a clock, a date or other. The item extends in a main direction 14. When the item comprises a string of characters the main direction 14 may be the reading direction of the string of characters.

In step 204, the electronic device 2 determines whether a digit 16 is pressed on the touch screen 4.

If the electronic device 2 determines that no digit is pressed on the touch screen 4, the method loops back to step 202. If the electronic device 2 determines that a digit is pressed on the touch screen 4, the method goes to step 206.

In step 206, the electronic device 2 determines whether the digit 16 pressed on the touch screen 4 is the predetermined digit (e.g. index finger). For example, the processing unit 8 identifies a contact area delimited by the digit 16. The processing unit 8 determines one or more characteristics of the contact area and compares these characteristics with the characteristics stored in memory unit 10 during calibration in step 200.

If there is no match between the determined characteristics and the stored characteristics, the processing unit 8 determines that the digit 16 pressed on the touch screen 4 does not match with the predetermined digit (e.g. index finger) and the method loops back on step 202. If there is a match between the determined characteristics and the stored characteristics, the processing unit 8 determines that the digit 16 pressed on the touch screen 4 matches with the predetermined digit (e.g. index finger) and the method goes to step 208.

In step 208, the electronic device 2 determines an orientation of the digit 16 on the touch screen 4. For example, the processing unit 8 determines that the digit 16 extends in a main direction 18. The processing unit 8 then determines that an angle formed by the direction 14 of the item 12 and the direction 18 of the finger does not match a predetermined angle (e.g. a right angle).

In step 210, the electronic device 2 rotates the item 12 based on the determined orientation of the digit 16 on the touch screen 4 (as represented in Figure 4). For example, the processing unit 8 rotates the item 12 so that the angle formed by the directions 14 and 18 matches the predetermined angle (e.g. right angle).

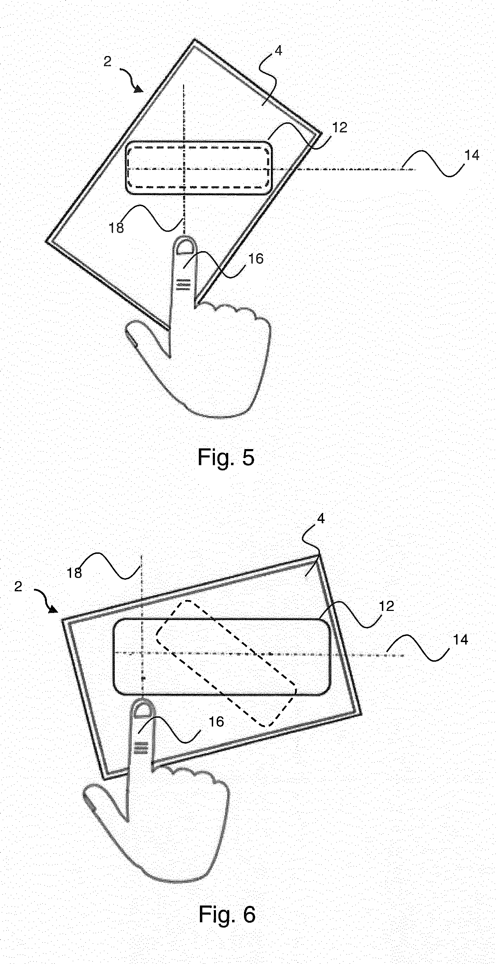

In step 212, the electronic device 2 scales the item 12, for example to increase the display size of the item 12 (as represented in Figure 5) or to decrease the display size of the item 12. For example, the processing unit 8 increases the size of the item 12 in the directions 14 and 18 so that the area occupied by the item 12 on the touch screen 4 is maximized. The method then loops back to step 202.

It will be understood that steps 204 to 212 may be repeated periodically to account for rotations of the electronic device 2 in the hands of the user. For example, when the electronic device 2 is rotated in the hands of the user (as represented in Figure 6), the item 12 is rotated as well so that the angle formed by the directions 14 and 18 still match the predetermined angle (e.g. right angle) and the area occupied by the item 12 on the touch screen 4 is maximized.

It will also be understood that in other embodiments, step 202 may be omitted.

For example, the electronic device 2 may be in a sleeping mode/ locked mode and the touch screen 4 may be turned off. As another example, the steps to determine the desired orientation of the item 12 may be carried out prior to the item 12 being displayed. Either way, no item 12 is currently displayed on the touch screen 4 at the beginning of the process in this example.

In such a case, in step 204, the processing unit 8 detects whether a digit 16 is pressed on the touch screen 4. If the processing unit 8 detects a digit 16 pressed on the touch screen 4, the method goes to step 206. For example, a user may press a digit 16 on the screen to wake up/ unlock the electronic device 2. Otherwise, the method loops back to step 204.

In step 206, the processing unit 8 determines whether the digit 16 is the predetermined digit. If the digit 16 is the predetermined digit, the method goes to step 208. Otherwise, the method loops back to step 204.

In step 208, the processing unit 8 determines an orientation of the digit 16 on the touch screen 4.

In step 210, the touch screen may be turned on and the processing unit 8 may display an item 12 that was previously not displayed (because step 202 is omitted). Alternatively, the touch screen 4 may be turned on but the item 12 was not previously displayed (for example, prior to its desired orientation being determined). The item 12 may be displayed based on the determined orientation of the digit 16 on the touch screen 4, that is the item 12 may be displayed so that directions 14 and 18 form a predetermined angle as described above.

In step 212, the processing unit 212 may scale the item 12 if needed or desirable.

It will also be understood that the processing unit referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to a memory unit. This may be provided by a single device or by plural devices. Suitable devices include for example a hard disk and nonvolatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of displaying an item on a touch screen, the method comprising:
detecting a digit pressed on the touch screen;
determining an orientation of the digit on the touch screen; and
displaying an item on the touch screen in an orientation based on the orientation of the digit on the touch screen.

2. A method according to claim 1, wherein displaying an item on the touch screen in an orientation based on the orientation of the digit on the touch screen comprises:
rotating an item previously displayed on the touch screen; or
displaying an item that was previously not displayed on the touch screen.

3. A method according to claim 1 or claim 2, wherein determining the orientation of the digit on the touch screen comprises:
determining that the digit extends in a first direction on the touch screen.

4. A method according to claim 3, wherein displaying an item on the touch screen in an orientation based on the orientation of the digit on the touch screen comprises:
displaying the item on the touch screen to extend in a second direction on the touch screen forming a predetermined angle with the first direction.

5. A method according to claim 4, wherein the item comprises a string of characters and wherein the second direction is a reading direction of the string of characters.

6. A method according to claim 4 or claim 5, wherein the predetermined angle is a right angle.

7. A method according to any of claims 1 to 6, comprising:
determining that the digit on the touch screen is a predetermined digit.

8. A method according to claim 5, wherein the predetermined digit is an index finger.

9. A method according to any of claims 1 to 8, comprising:
scaling the item on the touch screen.

10. A method according to any of claims 1 to 9, wherein the item is a notification, a widget, an icon, an image, a video, a window, a clock, a date or a menu.

11. An electronic device comprising:
a touch screen; and
a processing unit configured to detect a digit pressed on the touch screen, determine an orientation of the digit on the touch screen, and display an item on the touch screen in an orientation based on the orientation of the digit on the touch screen.

12. An electronic device according to claim 11, wherein the electronic device is a mobile phone, a tablet computer, a camera, video game console, a Global Positioning System, a smart watch a Personal Digital Assistant or an electronic book.

13. A computer program for an electronic device, comprising software code portions for performing the method of any of claims 1 to 10 when said computer program is run on the electronic device.
